# FASCICULE DE BREVET EUROPEEN

(11) **EP 3 246 555 B1**
(45) Date de publication et mention de la délivrance du brevet: **08.07.2020**
(21) Numéro de dépôt: 16169949.1
(22) Date de dépôt: 17.05.2016
(51) Int. Cl.: F02F 3/02, F16J 1/02

(54) **PISTON POUR MOTEUR À COMBUSTION POSSÉDANT UNE STRUCTURE ALLÉGÉE**
KOLBEN FÜR VERBRENNUNGSMOTOR, DER EINE LEICHTERE STRUKTUR BESITZT
PISTON FOR A COMBUSTION ENGINE HAVING A LIGHTWEIGHT STRUCTURE

(43) Date de publication de la demande: 22.11.2017
(73) Titulaire: Perret, Nicolas, 1030 Bussigny (CH)
(72) Inventeur: Perret, Nicolas, 1030 Bussigny (CH)
(74) Mandataire: Ganguillet, Cyril

(56) Documents cités:
- EP-A1- 0 050 256
- EP-A2- 0 192 980
- FR-A1- 2 510 661

## Description

### Domaine technique

La présente invention concerne un piston pour moteur à combustion diminuant les frottements internes et possédant une structure allégée.

### Etat de la technique

Dans le domaine des moteurs à combustion interne, il est fait usage de pistons reliés chacun à une bielle, lesdits pistons effectuant des mouvements alternatifs à l'intérieur de cylindres coopérant avec les pistons. Lors de leurs déplacements, les pistons appuient une partie dénommée jupe contre la surface interne du cylindre créant ainsi des forces de poussée latérale et induisant des frottements importants entre le piston et le cylindre. Dans de nombreux pistons, la jupe est formée par une zone de forme générale cylindrique s'étendant autour du piston, dans la continuité de la bande annulaire s'étendant autour de la tête.

L'inconvénient d'une telle configuration connue est la grande surface de contact entre la jupe et le cylindre, laquelle induit un frottement plus important entre le piston et le cylindre.

Une solution pour limiter ces frottements consiste actuellement à utiliser des jupes plus courtes, formées dans des matériaux plus résistants et/ou ayant reçu un traitement antifriction. Cette solution s'avère toutefois relativement onéreuse. Par ailleurs, ces pistons à jupes raccourcies présentent l'inconvénient d'être moins stables durant leur déplacement à l'intérieur du cylindre du fait de la distance plus courte entre le point d'appui haut et bas du piston.

Des pistons ayant quatre éléments d'appuis en lieu et place de la jupe sont connus de FR 2 510 661, EP 0 192 980 ou EP 0 050 256.

### Divulgation de l'invention

La présente invention vise donc à proposer un piston pour moteur à combustion permettant de résoudre les problèmes susmentionnés.

A cet effet, conformément à l'invention, il est proposé un piston tel que défini dans la revendication 1.

D'autres caractéristiques importantes du piston de la présente invention sont également définies dans les revendications dépendantes 2 à 9.

L'invention concerne également un moteur à combustion muni du piston selon la présente invention.

Le piston ainsi configuré possède une jupe plus courte en largeur. Cette jupe raccourcie permet donc de réduire la surface de contact entre la jupe et le cylindre, ce qui induit un frottement moindre entre le piston et le cylindre, et, par conséquent, une diminution des forces de frottement. Cette surface réduite ne se fait pas au détriment de la stabilité du piston étant donné que la distance entre le point d'appui haut et bas du piston reste inchangée par rapport à un piston traditionnel comportant une jupe cylindrique ininterrompue depuis la tête jusqu'audit point d'appui bas. De plus, cette surface réduite permet également de réduire la surface à traiter dans le cas où le matériau constitutif de la jupe reçoit un traitement antifriction. Il en résulte donc une diminution des coûts de production. Par ailleurs, cette jupe raccourcie permet également une augmentation du rendement et un abaissement de la température de fonctionnement du fait des frottements moindres, ainsi qu'une amélioration de la lubrification du piston du fait de l'accès facilité pour le liquide de lubrification.

### Brève description des dessins

D'autres avantages et caractéristiques de la présente invention seront mieux compris à la lecture de plusieurs modes particuliers de réalisation de l'invention et en référence aux dessins dans lesquels:
- la figure 1 représente une vue en perspective d'un piston conforme à l'invention;
- la figure 2 représente une vue de face du piston représenté sur la figure 1;
- la figure 3 représente une vue de profil du piston représenté sur la figure 1;

### Description détaillée d'un mode d'exécution de l'invention

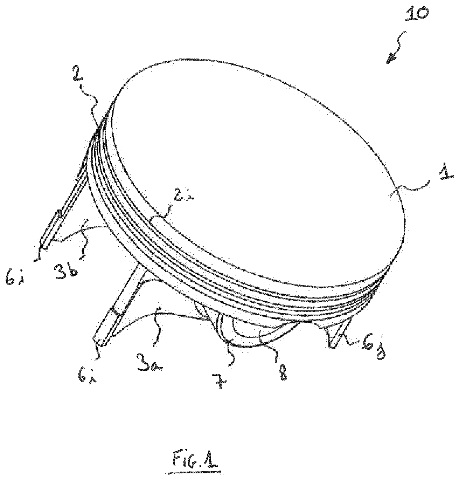

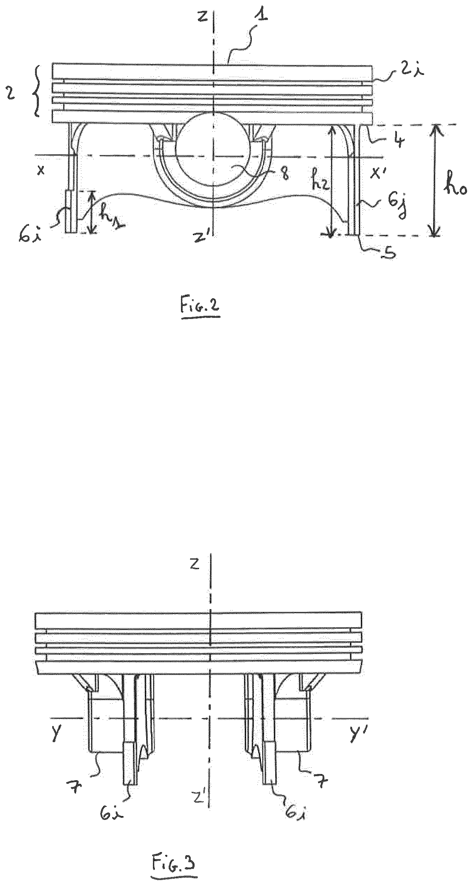

En référence aux figures 1 à 3, il est représenté un piston regroupant au sein d'une même structure deux variantes selon la présente invention. Chacune des variantes occupe une moitié de piston, les deux variantes étant séparées par un plan médian représenté sur la figure 2 par la ligne discontinue ZZ'. Un piston selon l'une des variantes de la présente invention sera donc formé de deux moitiés identiques, disposées de manière symétrique par rapport audit plan médian. Ce piston 10 comprend une tête 1 de forme sensiblement cylindrique, présentant un rebord circonférentiel 2 qui forme une ceinture annulaire dans laquelle sont ménagées des rainures espacées le long d'une direction axiale ZZ' définie par le piston. Deux supports de bielle sensiblement plans, respectivement un support de bielle avant 3a et un support de bielle arrière 3b, s'étendent de manière symétrique par rapport à la direction axiale ZZ' depuis une face inférieure 4 de la tête 1 jusqu'à leur bord inférieur 5, lesdits supports de bielle étant ainsi espacés l'un de l'autre dans une direction radiale YY' perpendiculaire à la direction axiale ZZ'. Chacun des supports de bielle 3a, 3b est traversé de part en part par un bossage 7, lesdits bossages étant venus de matière avec lesdits supports de bielle. Chacun des bossages 7 est percé d'une ouverture traversante 8 destinée à recevoir l'axe du piston autour duquel s'articule une bielle (non représentée). La direction géométrique définie par les ouvertures traversantes 8, et, donc, par l'axe du piston, pourra avantageusement être parallèle à la direction YY'.

Chaque support de bielle 3a, 3b est muni sur ses bords latéraux gauche et droit d'éléments d'appui gauche et droit 6i, 6j, lesdits éléments d'appui étant destinés à venir en contact avec la surface interne du cylindre à l'intérieur duquel coulisse le piston. Ces éléments d'appui 6i et 6j jouent donc le même rôle que les jupes des pistons de l'art antérieur. De manière à permettre un meilleur coulissement du piston à l'intérieur du cylindre, lesdits éléments d'appui 6i et 6j posséderont de manière avantageuse une forme complémentaire de celle du cylindre. Ainsi, chaque élément d'appui 6i, 6j pourra par exemple posséder au moins une paroi externe de forme partiellement cylindrique, ladite paroi externe étant de préférence inscrite dans un cylindre centré par rapport à la direction axiale ZZ' du piston, le diamètre externe dudit cylindre étant sensiblement égal au diamètre externe de la tête du piston.

Dans la variante représentée dans la moitié gauche du piston sur la figure 2, les éléments d'appui gauche 6i ont une hauteur h1, telle que mesurée dans la direction axiale ZZ', qui est inférieure à la hauteur h0 du bord latéral gauche de chacun des supports de bielle 3a, 3b et sont disposés de manière protubérante à l'extrémité inférieure de ce bord latéral gauche. La hauteur h0 correspond à la distance, telle que mesurée dans la direction axiale ZZ', entre la face inférieure 4 de la tête et le bord inférieur 5 des éléments d'appui. Chacun des éléments d'appui 6i dépassent ainsi du bord latéral gauche selon une distance mesurée selon une direction radiale XX' perpendiculaire à la direction YY'. Dans le cas d'éléments d'appui 6i de forme partiellement cylindrique, cette distance varie jusqu'à atteindre une valeur maximale avantageusement comprise entre 0,1 mm et 3 mm. Ainsi configurés, les éléments d'appui 6i définissent une surface de contact réduite entre le piston et son cylindre associé, ce qui permet de diminuer fortement les forces de frottement internes. Par ailleurs, ils permettent de maintenir le piston entre deux points d'appui extrêmes, à savoir un point d'appui haut situé au niveau de la tête et un point d'appui bas situé au niveau des éléments d'appui. Ces deux points d'appui étant relativement éloignés l'un de l'autre, le piston se déplace donc de manière aussi stable à l'intérieur de son cylindre associé qu'un piston conventionnel dont la jupe couvrirait l'intégralité de l'espace séparant les bords gauche des supports de bielle 3a, 3b. La hauteur h1 sera fixée en fonction des contraintes subies par le piston. De manière préférentielle, il sera avantageux de choisir la hauteur h1 de telle sorte qu'elle soit inférieure ou égale à la moitié de la hauteur h0.

Dans la variante représentée dans la moitié droite du piston sur la figure 2, les éléments d'appui droit 6j ont quant à eux une hauteur h2, telle que mesurée dans la direction axiale ZZ', qui est sensiblement égale à la hauteur h0 du bord latéral droit de chacun des supports de bielle 3a, 3b. Ils couvrent donc l'intégralité de ce bord latéral droit. Ainsi configurés, ils définissent également une surface de contact réduite par rapport à un piston conventionnel dont la jupe couvrirait l'intégralité de l'espace séparant les bords latéraux droit des supports de bielle 3a, 3b. Toutefois, par rapport aux éléments d'appui gauche 6i plus courts, l'impact sur les forces de frottement internes est moindre.

Dans les deux variantes précédemment décrites, il sera envisageable d'augmenter la largeur des supports de bielle 3a, 3b, ainsi que des éléments d'appui 6i, 6j, selon la direction YY' de manière à accroître leur rigidité.

## Revendications

1. Piston (10) pour moteur à combustion, comprenant une tête (1) de piston, deux supports de bielle (3a, 3b) espacés dans une première direction radiale (YY') perpendiculaire à une direction axiale (ZZ') définie par le piston, et des éléments d'appui (6i, 6j) formant jupes disposés à chacune des extrémités inférieures de chacun desdits supports de bielle (3a, 3b) de telle sorte à être espacés les uns des autres dans une direction circonférentielle centrée autour de ladite direction axiale (ZZ'), lesdits éléments d'appui (6i, 6j) possédant une même hauteur (h1, h2) telle que mesurée dans la direction axiale (ZZ'), ladite hauteur (h1, h2) étant inférieure ou égale à la hauteur (h0) desdits supports de bielle (3a, 3b),
dans lequel les deux supports de bielle (3a, 3b) s'étendent dans une deuxième direction radiale (XX') perpendiculaire à la première direction radiale (YY'),
**caractérisé en ce que** chaque support de bielle (3a, 3b) présente à chaque extrémité un bord latéral gauche et un bord latéral droit s'étendant parallèlement à la direction axiale (ZZ') sur l'ensemble de la hauteur (h0) des supports de bielle (3a, 3b),
et **en ce que** lesdits éléments d'appui (6i, 6j) sont disposés sur les bords latéraux gauche et droit de chaque support de bielle (3a, 3b) et définissent chacun une surface de contact dont la largeur, selon la première direction radiale (YY'), correspond à la largeur desdits bords latéraux gauche et droit des supports de bielle (3a, 3b).

2. Piston (10) selon la revendication 1, **caractérisé en ce que** la hauteur des éléments d'appui (6i) est strictement inférieure à la hauteur (h0) des supports de bielle (3a, 3b).

3. Piston (10) selon la revendication 1, **caractérisé en ce que** la hauteur des éléments d'appui (6j) est égale à la hauteur (h0) des supports de bielle (3a, 3b).

4. Piston (10) selon la revendication 2, **caractérisé en ce que** la hauteur des éléments d'appui (6i) est inférieure ou égale à la moitié de la hauteur (h0) des supports de bielle (3a, 3b).

5. Piston (10) selon l'une quelconque des revendications précédentes, **caractérisé en ce que** les éléments d'appui (6i, 6j) dépassent des extrémités inférieures des supports de bielle (3a, 3b) selon une distance maximale mesurée selon la deuxième direction radiale (XX').

6. Piston (10) selon la revendication 5, **caractérisé en ce que** ladite distance maximale est comprise entre 0,1 mm et 3 mm.

7. Piston (10) selon l'une quelconque des revendications précédentes, **caractérisé en ce que** chaque élément d'appui (6i, 6j) possède au moins une paroi externe de forme partiellement cylindrique définissant ladite surface de contact.

8. Piston (10) selon la revendication 7, **caractérisé en ce que**, la tête (1) du piston étant de forme cylindrique, chaque élément d'appui (6i, 6j) est configuré de telle sorte que l'une de leur paroi externe est inscrite dans un cylindre centré par rapport à la direction axiale (ZZ') du piston, le diamètre dudit cylindre étant sensiblement égal au diamètre de la tête (1) du piston.

9. Piston (10) selon l'une quelconque des revendications précédentes, **caractérisé en ce que** l'espace séparant les deux supports de bielle (3a, 3b), dans la première direction radiale (YY'), en-dessous de la tête (1) du piston, est entièrement libéré.

10. Moteur à combustion muni d'un piston (10) selon l'une quelconque des revendications précédentes.

## Patentansprüche

1. Kolben (10) für einen Verbrennungsmotor, der einen Kolbenkopf (1), zwei Pleuelträger (3a, 3b), die in einer ersten radialen Richtung (YY') lotrecht zu einer vom Kolben definierten axialen Richtung (ZZ') beabstandet sind, und Schürzen bildende Auflageelemente (6i, 6j) enthält, die an jedem der unteren Enden jedes der Pleuelträger (3a, 3b) so angeordnet sind, dass sie in einer um die axiale Richtung (ZZ') zentrierten Umfangsrichtung zueinander beabstandet sind, wobei die Auflageelemente (6i, 6j) eine gleiche Höhe (h1, h2) wie in axialer Richtung (ZZ') gemessen besitzen, wobei die Höhe (h1, h2) geringer als die oder gleich der Höhe (h0) der Pleuelträger (3a, 3b) ist,
wobei die zwei Pleuelträger (3a, 3b) sich in einer zweiten radialen Richtung (XX') lotrecht zur ersten radialen Richtung (YY') erstrecken,
**dadurch gekennzeichnet, dass** jeder Pleuelträger (3a, 3b) an jedem Ende einen linken Seitenrand und einen rechten Seitenrand aufweist, die sich parallel zur axialen Richtung (ZZ') über die ganze Höhe (h0) der Pleuelträger (3a, 3b) erstrecken,
und dass die Auflageelemente (6i, 6j) auf den linken und rechten Seitenrändern jedes Pleuelträgers (3a, 3b) angeordnet sind und je eine Kontaktfläche definieren, deren Breite gemäß der ersten radialen Richtung (YY') der Breite der linken und rechten Seitenränder der Pleuelträger (3a, 3b) entspricht.

2. Kolben (10) nach Anspruch 1, **dadurch gekennzeichnet, dass** die Höhe der Auflageelemente (6i) strikt niedriger ist als die Höhe (h0) der Pleuelträger (3a, 3b).

3. Kolben (10) nach Anspruch 1, **dadurch gekennzeichnet, dass** die Höhe der Auflageelemente (6j) gleich der Höhe (h0) der Pleuelträger (3a, 3b) ist.

4. Kolben (10) nach Anspruch 2, **dadurch gekennzeichnet, dass** die Höhe der Auflageelemente (6i) niedriger als die oder gleich der Hälfte der Höhe (h0) der Pleuelträger (3a, 3b) ist.

5. Kolben (10) nach einem der vorhergehenden Ansprüche, **dadurch gekennzeichnet, dass** die Auflageelemente (6i, 6j) über die unteren Enden der Pleuelträger (3a, 3b) gemäß einem maximalen Abstand gemessen gemäß der zweiten radialen Richtung (XX') vorstehen.

6. Kolben (10) nach Anspruch 5, **dadurch gekennzeichnet, dass** der maximale Abstand zwischen 0,1 mm und 3 mm liegt.

7. Kolben (10) nach einem der vorhergehenden Ansprüche, **dadurch gekennzeichnet, dass** jedes Auflageelement (6i, 6j) mindestens eine Außenwand von teilweise zylindrischer Form besitzt, die die Kontaktfläche definiert.

8. Kolben (10) nach Anspruch 7, **dadurch gekennzeichnet, dass**, indem der Kopf (1) des Kolbens von zylindrischer Form ist, jedes Auflageelement (6i, 6j) so konfiguriert ist, dass eine seiner Außenwände sich in einen Zylinder einpasst, der bezüglich der axialen Richtung (ZZ') des Kolbens zentriert ist, wobei der Durchmesser des Zylinders im Wesentlichen gleich dem Durchmesser des Kopfs (1) des Kolbens ist.

9. Kolben (10) nach einem der vorhergehenden Ansprüche, **dadurch gekennzeichnet, dass** der die zwei Pleuelträger (3a, 3b) in der ersten radialen Richtung (YY') trennende Raum unter dem Kopf (1) des Kolbens vollständig freigelassen wird.

10. Verbrennungsmotor, der mit einem Kolben (10) nach einem der vorhergehenden Ansprüche versehen ist.

## Claims

1. Piston (10) for a combustion engine, comprising a piston head (1), two connecting rod supports (3a, 3b) spaced apart in a first radial direction (YY') perpendicular to an axial direction (ZZ') defined by the piston, and bearing elements (6i, 6j) forming skirts arranged at each of the lower ends of each of said connecting rod supports (3a, 3b) so as to be spaced apart from one another in a circumferential direction centred on said axial direction (ZZ'), said bearing elements (6i, 6j) having a same height (h1, h2) as measured along the axial direction (ZZ'), said height (h1, h2) being less than or equal to the height (h0) of said connecting rod supports (3a, 3b),
wherein the two connecting rod supports (3a, 3b) extend in a second radial direction (XX') perpendicular to the first radial direction (YY'),
**characterized in that** each connecting rod support (3a, 3b) exhibits at each end a left-hand lateral edge and a right-hand lateral edge extending parallel to the axial direction (ZZ') over the entire height (h0) of the connecting rod supports (3a, 3b),
and **in that** said bearing elements (6i, 6j) are arranged on the left-hand and right-hand lateral edges of each connecting rod support (3a, 3b) and each define a contact surface whose width, in the first radial direction (YY'), corresponds to the width of said left-hand and right-hand lateral edges of the connecting rod supports (3a, 3b).

2. Piston (10) according to claim 1, **characterized in that** the height of the bearing elements (6i) is strictly less than the height (h0) of the connecting rod supports (3a, 3b).

3. Piston (10) according to claim 1, **characterized in that** the height of the bearing elements (6j) is equal to the height (h0) of the connecting rod supports (3a, 3b).

4. Piston (10) according to claim 2, **characterized in that** the height of the bearing elements (6i) is less than or equal to half the height (h0) of the connecting rod supports (3a, 3b).

5. Piston (10) according to any one of the preceding claims, **characterized in that** the bearing elements (6i, 6j) extend past the lower ends of the connecting rod supports (3a, 3b) by a maximum distance measured along the second radial direction (XX').

6. Piston (10) according to claim 5, **characterized in that** said maximum distance is between 0.1 mm and 3 mm.

7. Piston (10) according to any one of the preceding claims, **characterized in that** each bearing element (6i, 6j) has at least one partially cylindrical outer wall defining said contact surface.

8. Piston (10) according to claim 7, **characterized in that**, the piston head (1) being cylindrical, each bearing element (6i, 6j) is configured such that one of their outer walls coincides with a cylinder centred with respect to the axial direction (ZZ') of the piston, the diameter of said cylinder being essentially equal to the diameter of the piston head (1).

9. Piston (10) according to any one of the preceding claims, **characterized in that** the space between the two connecting rod supports (3a, 3b), in the first radial direction (YY'), below the piston head (1), is entirely free.

10. Combustion engine provided with a piston (10) according to any one of the preceding claims.
